# EUROPEAN PATENT APPLICATION

(11) **EP 1 320 270 A1**
(43) Date of publication of application: **18.06.2003**
(21) Application number: 01129542.5
(22) Date of filing: 11.12.2001
(51) Int. Cl.: H04Q 7/22, G01C 21/20, G08G 1/09, H04B 7/26

(54) **System for deploying location-based services**

(71) Applicant: Sony International (Europe) GmbH, 10785 Berlin (DE)
(72) Inventor: Müller, Gil, Advanced Technology Center Stuttgart, 70327 Stuttgart (DE)
(74) Representative: Müller - Hoffmann & Partner

(57) **Abstract**

A method of deploying location based services executable on different clients (1) of a client-server system comprises the following steps: transferring service correlated data from a server to said clients (1) on the basis of a push mechanism which works independent with respect to activities performed on said clients, said service correlated data including location-service linking information, processing said location-service linking information on the clients (1), thereby assigning locations to services and/or services to locations, executing said services on the basis of said assignments between locations and services. Thus, the server and the clients (1) can be decoupled, which reduces the communication effort between the server and the clients (1).

## Description

The invention relates to a method of deploying location-based services, and a client, a server and a client-server system suitable to perform said method.

Location-based services are services which are associated with a location. A location-based service may for example be a service which informs a user about traffic events in a location-dependent manner. If users are conditioned by the natural environment to process location-based information, offering location-based services provides a means to filter and group services according to the interest of the user.

Systems providing location based services typically are an extension of a geographical information system (GIS). In such systems not only geographical data is presented to the user, but also additional information or services (for example opening times of a restaurant, a description of a site, or the possibility for a user to make a reservation for a hotel) are available. While parts of services/service correlated data might be offered as stand-alone solution, it is important especially for highly dynamic service correlated data to externalize respective information sources providing said service correlated data.

To enable an externalization of information sources, usually a pull architecture is used being based on a client-server architecture (see for example [8], [9], [20], [21], [22] and [26]). Using this architecture, the user issues a request with respect to a service by using a client like a handheld or a mobile phone, wherein the request is passed to a server. The server then processes the request. To provide location-dependent service-correlated information, location information about the location of the user has to be included within the request or has to be determined by the server itself. In dependency of the issued request, service-correlated data is assembled by the server, which is returned to the client. The service-correlated data transferred to the client is presented to the user. If mobile clients are used, generally different gateways on the server's side have to be used which differ in terms of bandwidth and cost (gateways for WAP [23], SMS [24] or mobile internet are different from each other).

However, using such an architecture has two major problems:
- Privacy: The user has to disclose his/her position to the server.
- Costly scalability regarding communication bandwidth and server: As a unicast medium is used, the service-correlated data has to be provided individually in terms of connection and transaction between the server and the clients. This is also true for service-correlated data being requested by many users. An additional proxy server for fetching and storing service-correlated data of common interest for users of a particular domain may relieve the load of the server, but the problem of sharing a unicast communication link to the server between many users is even stronger.

Other problems, in particular related to the current deployment of above described client-server systems are:
- Inflexibility: Services are normally tailored to a single or a few domains.
- No interoperability: It is difficult to combine above described client-server systems with other systems.
- If mobile clients are used, the service-correlated data has to be fitted in accordance with a low bandwidth.
- It is difficult to reuse existing services which are not location-based since location-specific data cannot be separated from general application content (see for example [18]).

It is an object of the present invention to provide a system for location-based services which avoids the privacy problem described above while at the same time providing a lean architecture.

To solve this object, the present invention provides a method of deploying location-based services according to claim 1. Further, the invention provides a client for deploying location-based services according to claim 8. Further, the invention provides a server being connectable to clients according to claim 16.

Last, the invention provides a client-server system for deploying location-based services according to claim 19. A computer program product according to the present invention is defined in claim 20. Preferred embodiments of the present invention are respectively described in respective subclaims.

In the following some terms will be explained which are used within the description.

A "service" is a kind of activity provided by a client to a user in order to fulfill some need. Viewed from the client's side, it is the behaviour of the application. Applications are the technical means to realize services. They are composed of three components, namely the application code, the application engine and the application content. The application engine is used to execute the application code, so that the user can interact with the application (for example a HTML-page can be regarded as application code which is rendered by a web browser as its application engine). The application content is to be regarded as the flexible part of the application (in the case of a GIS-application the application content is for example map data).

A "location" is any form of description which refers to a virtual or physical place. A virtual location is an abstraction of reality, for example a map or a reference to a map or a reference to a point on a map. A service (application) is location-based if the service is either involved in dealing with locations (for example a navigation system) or if the service is activated in dependence of a location related to the service (e. g. the web site of a bakery might be connected to a certain location).

Location-service linking means associating a location with a service and/or associating a service with a location. This is a true n-to-n relationship, as a service might be associated with several locations, and a location might be associated with several services. Location-service linking is represented by location-service linking information.

Using the above described terminology, the invention provides a method of deploying location-based services executable on different clients of a client-server system, which comprises the steps of:
- transferring service correlated data from a server to said clients on the basis of a push mechanism which works independent with respect to activities performed on said clients, said service-correlated data including location-service linking information,
- processing said location-service linking information on the clients, thereby assigning locations to services and/or services to locations,
- executing said services on the basis of said assignments between locations and services.

Client-server systems which use a push mechanism to transfer information from the server to the client may be classified into two categories:
- the server transfers ("pushes") the information into information channels without knowing which clients are connected to this information channels and will pick up therefore this information; the act of pushing is not initiated by the clients but only by the server itself since the server does not "know" anything about the clients (no information is transferred from the client to the server). An example is radio broadcasting: the server (transmission station) sends information without knowing which receivers will pick up said information. The act of sending information by the transmission station is not initiated by the receivers.
- the server transfers ("pushes") the information into information channels knowing which clients will pick up this information, since the clients previously have informed the server which information channel is associated with them. As in the previous category, the clients do not have any influence upon which information is sent to the clients (information is identical for all clients) and when this information is sent. However, they have an influence upon if information is sent at all. An example is subscribing at the server by specifying a client-specific e-mail account, respectively, to which the information has to be sent. Thus, information is sent from the clients to the server. The push mechanism according to the present invention belongs to the first category.

The inventive method allows to avoid the privacy problem described above, since the clients and the server are decoupled (push mechanism). Further, it is possible to use a system (in particular a server) with a lean and modular architecture, since only one single kind of communication means between the clients and the server is necessary (only one gateway necessary) and all requests from the user are processed within the clients (on the basis of the server correlated data pushed from the server to the clients). In particular the feature of a modular system makes it possible to easily extend the system.

For example, a user of a client may want to buy bread at a certain location. He therefore activates a service already available on his client (terminal) to show him all information about bakeries at this specific location. The client uses location-service linking information available (already received from the server) to determine in dependency of the specific location which services are useful to offer to the user (information about a bakery 1000 km away should for example be of no interest). Available services may for example be presented in form of URLs pointing to respective bakery homepages in the internet, wherein the user can use this URLs to access the homepages, thereby getting access to the desired information. A rendering of this homepages by a browser on the client can be regarded as service itself.

In a preferred embodiment, application codes and/or application engines and/ or application content of applications for executing said services are transmitted within said service-correlated data. Thus, a large flexibility is achieved, since not only location information/location-service linking information can be updated within the clients, but also the applications and thus the services itself. In the following description, the term "service-correlated data" may mean application code, application engines, application content, location information, location-service linking information, or any combination thereof.

Preferably, the location-service linking information is included within the application content and/or application code before transmitting the application content and/or the application code from the server to the clients. However, it is also possible to transmit the location-service linking information separately with respect to the application content and/or the application code. This has the advantage that the inventive system can rapidly be deployed and can coexist well with non-location-based services since existing applications, e. g. internet applications, can be used/reused with little effort.

In a preferred embodiment broadcast means and/or the internet are used as the respective communication channels to realize the push mechanism) to transfer the service-correlated data from the server to the clients. This has the advantage that a flexible and extendible service concept is provided. In case of using broadcast means, there are further the advantages that it is easier to transfer data-intensitive service correlated data (location-service linking information and/or applications), since broadcast systems tend to have higher bandwidths. Further, transferring costs are low.

A positioning device connectable to the clients may be used to determine the actual location of clients, respectively, wherein the assignments between the location and the services and/or the steps of executing the services on the basis of the assigned locations are performed on the basis of the actual location. This enables to deal with moving clients.

It is further preferable to use separate communication channels for transferring different parts of the service-correlated data from the server to the clients, respectively. For example it may be useful to transfer parts of the service-correlated data which have to be updated very often via a cheap communication channel like a broadcast system, whereas parts of the service-correlated data which have to be updated only several times may be transferred to the clients via a communication channel which is more reliable but also more costly.

A client for deploying location-based services according to the present invention is connectable to a server and comprises:
- receiving means for receiving service-correlated data from the server on the basis of a push mechanism which works independent with respect to activities performed on said client,
- processing means being connected to the receiving means for assigning locations to services and/or services to locations on the basis of location-service linking information contained within the service-correlated data, and
- executing means being connected to the receiving means and/or the processing means for executing services on the client on the basis of the assignments between locations and services.

The client may for example be a terminal, a hand-held, a mobile phone or the like.

In a preferred embodiment, extracting means are connected between the receiving means and the processing means for extracting the location-service linking information from the service-correlated data and for supplying the extracted location-service linking information to the processing means.

The client may further comprise a database being connected to the receiving means and/or processing means and/or extracting means for storing the location-service linking information.
Further, the client may comprise at least one sending means for sending service-correlated data from the client to a server and/or other clients.

The client may further comprise selecting means being connected to said database and executing means for selecting services to be executed on the basis of said location-service linking information.

To deal with moving clients, the client may further comprise positioning means for determining the actual position of the client.

The client may further comprise an interface enabling a user to access and change stored location-service linking information and/or to input new location-service linking information into the client/database. This enables the user to very flexible handle location-service linking information and therefore to very flexible deal with services. The user may for example use this interface to create location information or location-service linking information.

In a preferred embodiment, the receiving means of the client may comprise at least two receiving units for separately receiving different parts of the service correlated information, respectively. For example, a first receiving means may receive only location-service linking information, wherein a second receiving means may only receive application content, application code, etc.. This enables a very effective and flexible handling of services/location-service correlated data, as will be discussed later.

The present invention further provides a server being connectable to clients for providing the clients with service-correlated data needed by the clients to execute respective services, which comprises embedding means for embedding location-service linking information into service-correlated data and sending means for transmitting the service-correlated data to the clients on the basis of a push mechanism which works independent with respect to activities performed on said clients.

In a preferred embodiment, the embedding means are means for embedding location-service linking information into HTML data and/or JAVA data and XML data and/or broadcast service data.

The sending means of the server may comprise at least two sending units connectable to different communication channels to transmit different parts of the service correlated data via different communication channels to the clients, respectively.

Last, the present invention provides a client-server system for deploying location-based services, including a client according to the present invention and a server according to the present invention.

Further features, embodiments and advantages of the present invention will be discussed in the following description while making reference to the accompanying drawings, wherein
- **Fig. 1**: shows a preferred embodiment of a system according to the present invention;
- **Fig. 2**: shows the embodiment of Fig. 1 with an additional positioning means according to the present invention;
- **Fig. 3**: shows the embodiment of Fig. 1 with an additional receiving means according to the present invention;
- **Fig. 4**: the embodiment of Fig. 1 with an additional persistent storage means according to the present invention;
- **Fig. 5**: the embodiment of Fig. 1 with an additional sending means according to the present invention;
- **Fig. 6**: a preferred embodiment of a client according to the present invention.

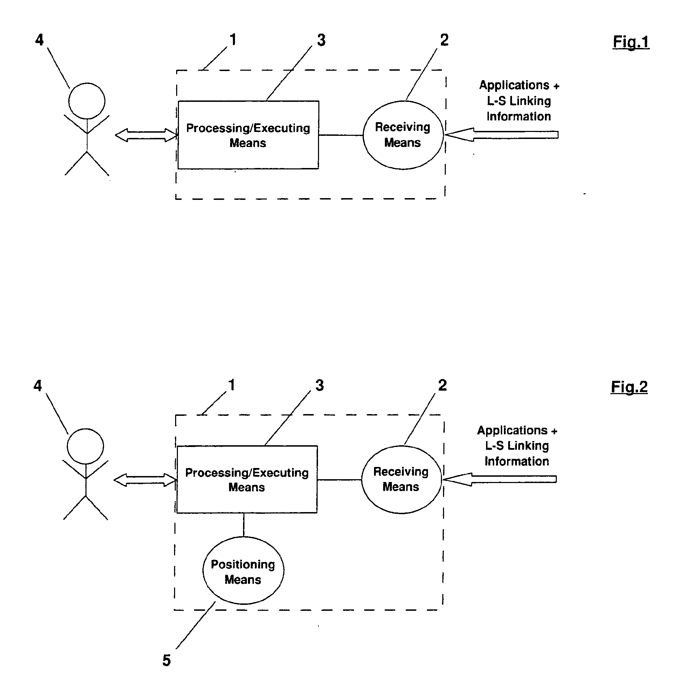

In the following description, making reference to Fig. 1, a preferred embodiment of a system according to the present invention will be discussed.

In Fig. 1, a client 1 comprises a receiving means 2 and processing/executing means 3.

At least three kinds of activities may be performed with the processing/executing means 3:
1. Collecting location-service linking information: It is important to process incoming location-service linking information contained within service-correlated data received by the receiving means 2 (the format issues are discussed below). For example, service-correlated data, in particular location-service linking information, may be stored in a database (not shown) which may be optimized for fast retrieval.
2. Service selection by a user 4: The processing/executing means 3 allows the user 4 to select from available services. For example, the user may search or filter services on the basis of a specific location and other criteria (e.g. a search command "give me all bakeries near the city center of Münster" may yield a URL to a service (for example homepage) of a Bakery to preorder bread). Possible hits can be displayed as list from which the user 4 may select. Another example would be to display available services on a map, including streets and other geographical information. Like in a GIS-system, the user 4 could use search or filter operations to reduce the amount of data which is displayed. Finally, a selection of services may be connected to the physical reality (position) of the user 4. For example, when the user 4 is looking to a church nearby to which a sight service is linked, this service may be invoked.
3. Execution of selected services: The application which realizes a selected service is executed. How this is done depends on the respective application technology. When for example a service is related to a HTML-page, a web browser may be launched to execute this service, i. e. to render the HTML-page. An alternative may be to launch services automatically depending on the user's action. For instance, when entering a certain area of a nearby business, the service of the business may be activated automatically. This behaviour of the system preferably is configurable by the user 4.

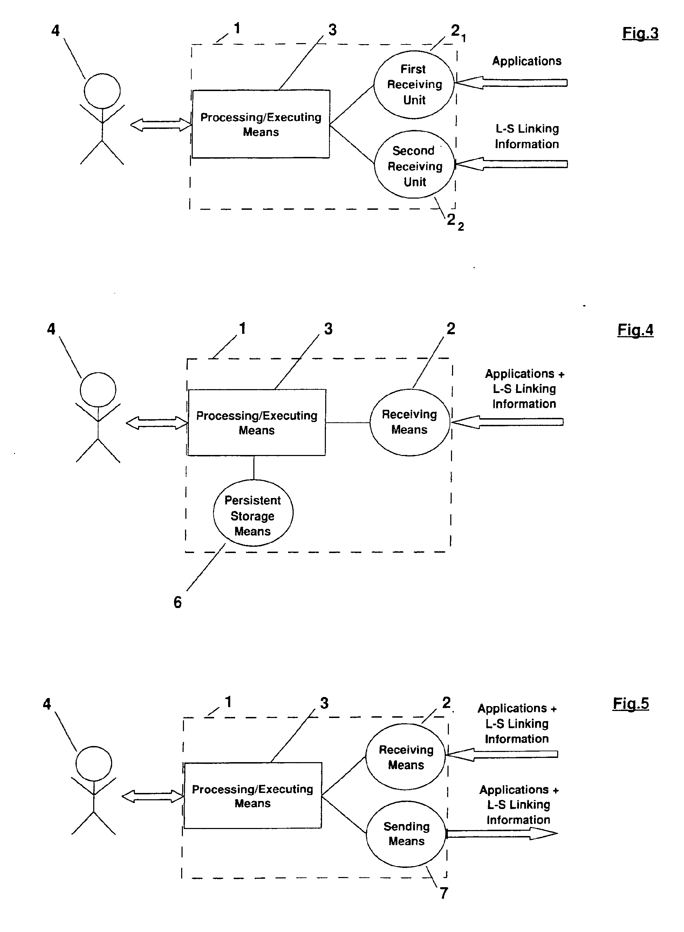

As shown in Fig. 2, the system of the present invention can be significantly improved using a positioning means 5 (e. g. a GPS-receiver). The positioning means 5 may for example be used to relate search operations to the user's position (e. g. "give me all bakeries within 1 km") or display the user's (client's) position on a map of available services.

As shown in Fig. 3, another extension is to use several receiving means, here a first receiving means 2₁ and a second receiving means 2₂. This enables to increase the bandwidth. As already mentioned, using several receiving means 2₁ and 2₂ may enable to save costs. For example, a DAB-receiver as a first receiving means 2₁ could by used to receive location-service linking information (low transmission costs) and a mobile phone as a second receiving means 2₂ to receive a corresponding application content (individual service). The use of several receiving means 2₁, 2₂ may be opaque (the user is not informed which data is received from which receiving means) or transparent (the user is asked before receiving respective data as different cost functions are related to different receiving means). In this embodiment the first receiving means 2₁ receives applications as a first part of the service-correlated data, and the second receiving means 2₂ receives location-service linking information as a second part of the service-correlated data.

In the following description section it is discussed how applications can be tagged with location information.

An important aspect of the present invention is to associate services with location data. This could be achieved by adding location-service linking information to the application content or by distributing service identifiers together with location (service id + location = linking information) data separately from the "rest" of the service correlated data (for example application content). Generally, each piece of location-service linking data consists of location data and a service identifier. In the case that location-service linking data is embedded into an application content, the service identifiers may be left, since the application into which content the location-service linking data is embedded is already the service to be associated. The way how to add location-service linking information (location data) to the application content is dependent on the respective service technology used, e. g.:
- For HTML-based application content location data could be placed inside a META-tag of one or more of those pages [13],
- for JAVA-application content location data may be added in an attribute of the MANIFEST file of an JAR-archive [4],
- for XML-based application content [3] separate elements might be defined to include the location data, and
- for broadcast application content location data might be included in the service data (service data in the sense of a broadcast system). For example, for DAB location data is included in the FIG 0/13 signaling of a DAB-user application.

If the location data is distributed separately from the application content data, service identifiers may be used (cf. below). The location-service linking data is distributed then as pairs of location data and service identifiers in some chosen format (e. g as XML data). The service-location linking data may be split up to deal with the characteristics of the bearer and the business requirements of the distributor. As it is described in [7], the service-location linking data may be split up into chunks according to frequency of use and frequency of updates. Additionally, the service-location linking data might be encrypted for a restricted service. As it is mentioned for single locations (cf. below), sets of locations might also be generated using executable code or external references.

Locations can be defined/described as a set of data having the following entries:
- A unique identifier within a given namespace. If the service identifier is left, the location cannot be referenced and is considered as anonymous.
- The actual location, which designates one or more areas (an area may degenerate into a position or a line), in one of the following formats:
   1. Numerically: given as coordinates in relation to a default reference system. The reference system may also be designated. E. g. longitude and latitude of WGS84 ([12]) might be used.
   2. Symbolically: a name is used (e.g. a city name or a postal address).
   3. Compositionally: The location is specified in terms of other locations (as in ILOC [2] or AGORA [16]).
   4. Descriptive: A textual description is given of the location itself or how to reach the location. This can be done either in a free format or semi-formal (e.g. using XML). This is somewhat similar to a compositional format, but here is the emphasis to use a human readable format.
   5. Procedurally: Application code is given (for example received from the server) which can be executed by some (virtual) machine. The result of executing this code is a location. For instance, a Java applet is used to determine the actual position of a moving object.
   6. Per reference: A reference to some external entity or some other location is given. References of the first type may involve the use of location servers which deliver locations on demand (e.g. a URL is given which is resolved on a server). Location references of the second type allow to provide multiple service identifiers for locations while sharing the information.

It is also possible to provide several formats at the same time.

### •The validity of the data:

1. The accuracy (e. g. using some overall quality or measurement)
2. Availability: time periods are given when the location data (or better the related service) is valid.

### • The producer/distributor of the data

### • Version information

Except the entry of the actual location, all other entries are optional. Location information can be extended to deal with 3D data (e. g. including the altitude of some position).

If a service identifier has to be used, the actual identifier depends on the used technology. For internet-related content currently an URL ([1]) is the best choice. For broadcast systems like DAB an identifier specific to this system can be used (e. g. in DAB a component identifier and/or a MOT (Multimedia Object Transfer [23] object identifier). Note, also the location data itself might be used to designate a service ([6]). Like it is done in broadcast systems, additional attributes may be added to the service identifier (c. g. a description of the service, the service type or a specification of the needed resources).

In the following description section, it is discussed how to deal with personal or community location-based services.

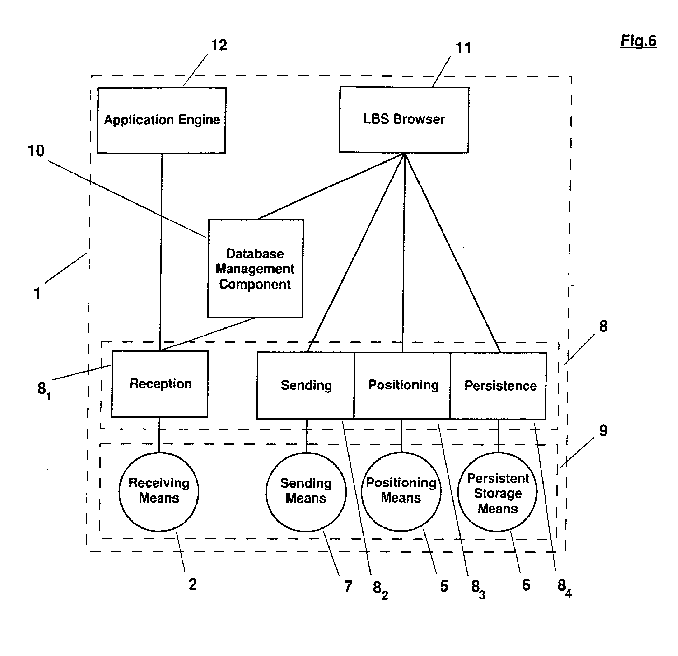

So far, the system is designed to handle location data/location-service linking data coming from outside the system. But also the user 4 may have the need to generate location data/location-service linking data or to manipulate those data. The following use cases demonstrate this:
1. Location-based events (e. g. [10]): The user 4 is notified in relation to his or her location-based activities. The following cases for generating an event can be considered:
   i. The user 4 designates one or more locations as hot spots. If he is entering (or is approaching) that location, an event is generated. For instance, this can be used for reminding the user 4 of doing some task in relation to the location.
   ii. The same principle can be applied to services. So, if a service is set to a particular location, a notification is sent to the user 4 (e. g. to get notified when someone is coming).
   iii. Finally, location changes of services can be notified. So, if a service moves out of some area, the user 4 gets a notification. This basic event notification can be extended to consider also service attributes (e. g. the user 4 is notified when she is passing a nearby bakery).
2. Passing location information: location-service linking information may be passed to other users. This can be similarly released to cut-and-paste of links to web pages.
3. Revealing the own position: The position of the user 4 may be revealed (as a kind of location service). This can be accomplished with the use of positioning means 5 or by asking the user 4 directly. The position can transferred manually as passing location information to other users or automatically as a personal location service (cf. below).
4. Location related tasks: The user 4 may want to execute a series of location services, c. g. doing a sightseeing tour. For this, the user 4 may preselect several services at the same time. (He additionally may do the selection in a certain order which will determine the activation).
   The activation of these selected services can now be coupled with certain events (cf. above): For instance, the service is launched when he is nearby or immediately as a preinformation.
5. Personal location services: Also the user 4 may create location services/location-service linking information (e.g. setting a link from the location of his/her home to the homepage). This can be handled similarly to annotations (cf. below). In difference to them these personal location services can be made available outside the client 1 if a sending means 7 is used (cf. below).
6. Bookmarking location-based services: Bookmarks are provided by web browsers to select services more directly. Similarly, the location-service linking information might be bookmarked. If a user 4 decides to bookmark a location-based service, the corresponding location-service linking information can be saved in a persistent database. Later, the user 4 is able to select the service directly from a view of this database (e. g. using a list or a map displaying only the bookmarked services). Similarly, it is possible to bookmark only locations.
7. Annotations: The user 4 may annotate location-based services. This could be a textual comment or a marker of the service.
   As a basis the system (maybe using a positioning means 5 or multiple receiving means 2₁ and 2₂) as described above can be used for these use cases. Depending on the use case the system may be extended with a persistent storage means 6 (cf. Figure 4) and/or a sending means 7 (cf. Figure 5). Note, that the sending means 7 might be identical with the receiving means (e.g. if only a mobile phone is used).
   For making annotations, it is necessary to save them using the persistent storage means 6. The same holds for events, bookmarking locations, location related tasks and for setting up personal location services. A sending means 7 is especially useful for community services like passing location data to other users or revealing the own position.
   In the following description section, making reference to Fig. 6, a preferred embodiment of the architecture of the client 1 (terminal) will be discussed.
   Using the architecture of the client 1 (cf. Figure 6), all use cases described above can be performed. The client 1 comprises several devices 9, a middleware layer 8, a database management component 10 (also referred to a database), a LBS ("Location-Based Services") browser 11, and an application engine 12. A middleware 8 consists of several components, which interface accordingly to respective devices 9. The database management component 10 is responsible for the collection of the location-service linking information. On the application level there are two components: The LBS browser 11 providing a service selection on the basis of the location-service linking information, and the application engine 12 being responsible for the execution of the services.
   The middleware layer 8 comprises a first component 8₁ which is connected to one or more receiving units 2. The middleware layer 8 further comprises a second component 8₂ for interfacing one or more sending units 7. The first component 8₁ and the second component 8₂ may be merged into one single component. E. g. if TCP/IP is used as a communication protocol to access and distribute information, it might be better to hide the capabilities of the different units (for example for a combination of DAB and GPRS) for the sake of the application simplicity. In this case the merged component decides which unit to be used.
   The middleware layer 8 further comprises a third component 8₃ for accessing the positioning means 5, which delivers the user's position. Here, also multiple positioning units might be used to improve the quality and availability of positioning. Finally, the middleware layer 8 comprises a fourth component 8₄ for writing data to a storage system and also for reading from it. The data on the storage system is preserved even if the client 1 is switched off.
   A central part in this architecture 1 is the collection of the location-service linking information. This is handled by the database management component 10 (DBM for short) which uses the transient storage of the client 1, but may also use the persistent storage (for which no link is indicated in Figure 6 for reasons of clarity). The DBM 10 receives the location-service linking information from the receiving means 2 - as long it is pushed from the server. It integrates this information in the DBM 10. (If the location-service linking information is embedded in the service (application content) as described above an extraction step is needed additionally). Apart from that it provides an interface to access the information is stored in the DBM 10.
   The LBS browser 11 provides the selection of location-based services. Different methods exist for the presentation of these location-based services (cf. above). In all cases the LBS browser 11 will use the location-service linking information in the DBM 10 to generate the presentation (some presentation methods even enable a continuous update). The user 4 will then be able to select a service from the presentation, which is executed using the application engine 12 (cf. below). The LBS browser 11 also is responsible for handling the personal and community location-based services.
   The application engine 12 is responsible for the execution of a selected service. One realization is to use a web browser, so that services can be realized on the basis of web technology. It is also possible to use different application engines 12 (e.g. one for stand-alone Java applications and another for web technology based applications). In this case, an additional component is needed to decide on the use of the application engine 12 when the service is used.
   To summarize, a client-server system for location-based services is provided using a push architecture. This makes the system especially attractive if used together with a broadcast communication facility. Apart from a basic system also extensions to add personal and community location-based services were discussed. An important aspect of this system is its modularity and scalability. Thus, the system provides a reasonable service if only a receiving unit 2 is available. But it significantly improves if a positioning means 5 or further receiving units 2 are added.
   A central element in this system is the distribution of the location-service linking information. This can for example be included in the application content itself, but in terms of flexibility it is better to distribute this information separately. This has the advantage that different pieces of location-service linking information can be easily reused/mixed by other services: For example, the system can be extended to provide meta-services. Such services use available location-service linking information originally provided for other services. E. g. a sightseeing guide (service) may in a first step collect (more specific and more updated) location-service information originally provided for specific sight services (e. g. church service or museum service), and in a second step then using this unified location-service linking information as a basis for executing a complete sightseeing service.
   It is proposed to use different formats for describing locations. This could be used to deal better with rapid changing/moving objects. As [2] points out, there is also a need for redundancy. A URL seems currently the best choice for the service identifiers, but also other types of service identifiers may be used.
   As it was pointed out, it is not only important to realize an environment per se, but also to consider how a user 4 can adapt the system to his or her personal needs. Apart from personalizing the system, the system might also offer group-oriented services. E. g. depending on the role of the user 4, the system offers different services (e. g. users which pay a premium rate get other services than users which pay a base rate).

### Reference List

[1] T. Berners-Lee et al.: "Uniform Resource Identifiers (URI): Generic Syntax", RFC2396, 1998.
[2] C. Dorenbeck and L. Heres: "Final location referencing rules specifications", EVIDENCE Deliverable D2.2, ERTICO, http://ww∼v.ertico.com/activiti/projects/acrobat/d2_2v10.pdf, 1999.
[3] T. Bray et al. (Eds.): "Extensible Markup Language(XML) 1.0", W3C Recommendation, http://www.w3.org/TR/1998/REC-xml-19980210, 1998.
[4] Sun Microsystems: "Jar File Specification", http://java.sun.corn/j2se/ 1.31docs/guide/jar/jar.html#JAR Manifest, 1999.
[5] Digital Audio Broadcasting (DAB): http://www.worlddab.org. Official Website, World DAB Forum.
[6] S.Pradhan: "Semantic Location", Personal Technologies, Vol.4, Issue 4, pp.213-215, htto://link.spriuger.de/link/service/journals/007791tocs/tocs/ t0004004.htm, 2000.
[7] R.Schäfer and R. Bittner: "Broadcast API - An application programming interface for accessing information services provided by a broadcast system", European Patent Application No. 99 108 701.6-2216, 1999.
[8] G.Patrick: "Location-dependent services in a mobile communication system", patent No. WO 98/19479,1998.
[9] R.B.Fultz: "Communication and navigation system incorporating position determination", Patent No. US 6169955, 2001.
[10] H. MaaJ3: "Location-Aware Mobile Applications based on Directory Services", MOBICOM 97, ACM, Budapest, p. 23-33, 1997
[11] W3C: "POIX: Point of Interest eXchange Language Specification". W3C Note, http://www.w3.org/TR/poix/, 1999.
[12] NIMA: "DoD World Geodetic System 1984 - Its Definitions and Relationships with local Geodetic Systems", TR83050.2 3^{rd} edition, http:164.214.59/ GandG/tr8350_2.html, 2000
[13] W3C: "HTML 4.01 Specification", W3C Recommendation, http:// www.w3.org/TR/html14/, 1999.
[14] Digital Video Broadcasting: http://ww.dvb.org, Official Website, DVB Consortium.
[15] S. Deering: "Multicast routing in a datagram internetwork", Ph.D. dissertation, 1991.
[16] AGORA, Official Website, ERTICO, http://www.ertico.com/links/5thfp/ agora/home.htm.
[17] IP Multicast Initiative, Official Website, http://www.ipmulticast.com/.
[18] R. Ritter: "Mobile apparatus and method for receiving and filtering from program-accompanying data on the basis of a defined position", patent no. WO 00/33493, 2000.
[19] K. Takahashi: "A Mobile Portal Service to Provide Location Dependent Information",http://www.w3.org.posdep/NTTindex.html, takahashi.katsumi@lab.ntt.co.jp.
[20] G. Israeli and B. Te-Eni: "Method and system for providing location specific services to mobile stations", patent no. WO00/65731, 2000.
[21] A. Berson: "Client/server Architecture": McGraw-Hill, 1992.
[22] L. Reiner: "Location dependent WWW service in digital cellular communication networks", patent no. US6256498, 2001.
[23] ETSI, EN 301 234, 1999: "Digital Audio Broadcasting (DAB); Multimedia Object Transfer (MOT) Protocol".

## Claims

1. Method of deploying location based services executable on different clients (1) of a client-server system, comprising the steps of:
- transferring service correlated data from a server to said clients (1) on the basis of a push mechanism which works independent with respect to activities performed on the clients (1), said service correlated data including location-service linking information,
- processing said location-service linking information on the clients (1), thereby assigning locations to services and/or services to locations,
- executing said services on the basis of said assignments between locations and services.

2. Method according to claim 1, **characterized by** transmitting application code and/or application engines and/or application content of applications for executing said services within said service correlated data.

3. Method according to claim 2, **characterized by** including said location-service linking information within said application content and/or application code before transmitting said application content and/or said application code from said server to said clients (1).

4. Method according to claim 2, **characterized by** transmitting said location-service linking information separately with respect to said application content and/or said application code.

5. Method according to anyone of the preceding claims, **characterized by** using broadcast means or any other network as respective communication channels to transfer the service correlated data from said server to said clients (1).

6. Method according to anyone of the preceding claims, **characterized by** using a positioning means (5) connectable to said clients (1) to determine the actual location of said clients (1), wherein said assignments between said locations and said services and/or the step of executing said services on the basis of said assigned locations are performed on the basis of said actual location.

7. Method according to anyone of the claims 4 to 6, **characterized by** using separate communication channels to separately transfer different parts of said service correlated data from said server to said clients (1), respectively.

8. Client (1) for deploying location based services being connectable to a server, comprising:
- receiving means (2) for receiving service correlated data from said server on the basis of a push mechanism which works independent with respect to activities performed on said client (1),
- processing means (3) being connected to said receiving means (2) for assigning locations to services and/or services to locations on the basis of location-service linking information contained within said service correlated data, and
- executing means (3) being connected to said receiving means (2) and/or said processing means (3) for executing services on said client on the basis of said assignments between locations and services.

9. Client (1) according to claim 8, **characterized by**
- extracting means being connected between said receiving means (2) and said processing means (3) for extracting said location-service linking information from said service correlated data and for supplying said extracted location-service linking information to said processing means (3).

10. Client according to claim 8 or 9, **characterized by**
- a database (10) being connected to said receiving means and/or processing means (3) and/or extracting means for storing said location-service linking information.

11. Client (1) according to claim 10, **characterized by**
- selecting means (11) being connected to said database (10) and executing means (3) for selecting services to be executed on the basis of said location-service linking information.

12. Client (1) according to anyone of the claims 8 to 11, **characterized by**
- sending means (7) for sending service correlated data from the client (1) to a server and/or other clients.

13. Client (1) according to anyone of the claims 8 to 12, **characterized by**
- positioning means (5) for determining the actual position of the client (1).

14. Client (1) according to anyone of the claims 8 to 13, **characterized by**
- an interface for accessing and changing stored location-service linking information and/or for inputting new location-service linking information into the client (1)/database (10).

15. Client (1) according to anyone of the claims 8 to 14, **characterized in that** said receiving means comprise at least two receiving units (2₁, 2₂) receiving separately different parts of said service correlated information, respectively.

16. Server being connectable to clients (1) for providing said clients (1) with service correlated data needed by said clients (1) to execute respective services, comprising:
- embedding means for embedding location-service linking information into said service correlated data,
- sending means for transmitting said service correlated data to said clients on the basis of a push mechanism which works independent with respect to activities performed on said clients (1).

17. Server according to claim 16, characerized in that said embedding means are means for embedding location-service linking information into HTML data and/or JAVA data and/or XML data and/or broadcast service data.

18. Server according to claim 16 or 17, characerized in that said sending means comprises at least two sending units connectable to different communication channels to transmit different parts of said service correlated data via different communication channels to the clients (1), respectively.

19. Client-server system for deploying location-based services, including:
- a client (1) according to anyone of the claims 8 to 15,
- a server according to anyone of the claims 16 to 18.

20. Computer program product, comprising computer program means adapted to perform at least parts of the method according to anyone of claims 1 to 1 and/or to embody at least parts of the client according to anyone of claims 8 to 15 and/or the server according to anyone of claims 16 to 18.
